# EUROPEAN PATENT SPECIFICATION

(11) **EP 4 331 933 B1**
(45) Date of publication and mention of the grant of the patent: **11.06.2025**
(21) Application number: 22721473.1
(22) Date of filing: 20.04.2022
(51) Int. Cl.: B60W 30/16

(54) **CONTROL DEVICE AND CONTROL METHOD**
STEUERUNGSVORRICHTUNG UND STEUERUNGSVERFAHREN
DISPOSITIF DE COMMANDE ET PROCÉDÉ DE COMMANDE

(30) Priority: 29.04.2021 JP 2021076948
(43) Date of publication of application: 06.03.2024
(73) Proprietor: Robert Bosch GmbH, 70442 Stuttgart (DE)
(72) Inventor: IGARI, Yoshihide, Yokohama-shi, Kanagawa 224-8501 (JP); TATEISHI, Atsuhiro, Yokohama-shi, Kanagawa 224-8501 (JP)
(86) International application number: PCT/IB2022/053667
(87) International publication number: WO 2022/229791

(56) References cited:
- EP-A1- 3 335 955
- DE-A1- 102019 200 209
- DE-A1- 102019 214 121
- US-A1- 2015 120 181
- US-A1- 2019 248 367
- US-A1- 2020 398 841

## Description

### Technical Field

The present invention relates to a controller and a control method that perform an adaptive cruise control appropriately in a group ride.

### Background Art

Various techniques for assisting a rider in driving a motorcycle are known. For example, JP 2009-116882 A discloses an assistance system for a rider of a motorcycle. The assistance system warns the rider that the motorcycle is inappropriately approaching an obstacle based on information detected by a sensor that detects the obstacle present in a travel direction or substantially in the travel direction.

EP 3335955 A1 describes a leaning vehicle comprising an active driving assist device.

DE 10 2019 200209 A1 describes a method and a device for selecting the target object for automatic distance control of a single-track motor vehicle.

DE 10 2019 214121 A1 describes a method for operating a driver assistance system.

US 2019/0248367 A1 describes a system for providing adaptive cruise control in a motorcycle.

US 2015/0120181 A1 describes a method, a system and a vehicle for conducting group travel.

### Citation List

### Patent Literature

PTL 1: JP 2009-116882 A
PTL 2: EP 3335955 A1
PTL 3: DE 10 2019 200209 A1
PTL 4: DE 10 2019 214121 A1
PTL 5: US 2019/0248367 A1
PTL 6: US 2015/0120181 A1

### Summary of Invention

### Technical Issues

An adaptive cruise control is known as an assistance technique for a driver. In the adaptive cruise control, a speed of a vehicle is controlled automatically without an acceleration operation or a deceleration operation by the driver to keep a distance between a subject vehicle and a target vehicle at a target distance. Such adaptive cruise control may be performed in a motorcycle. The adaptive cruise control is required to be performed appropriately according to traffic conditions around the subject vehicle. Here, there is a situation where motorcycles travels in a group during a group ride. Traffic conditions around the subject vehicle when the subject vehicle is in the group ride are different from traffic conditions around the subject vehicle when the subject vehicle is not in the group ride. As such, the adaptive cruise control is required to be performed appropriately during the group ride.

The present invention addresses the above-described issues, and therefore it is an objective of the present invention to provide a controller and a control method capable of performing an adaptive cruise control appropriately in a group ride.

### Solution to the Issues

The present invention is set out in the appended set of claims.

As one aspect of the present invention, a controller maneuvers a motorcycle. The controller includes an execution section, an acquisition section, and an identification section. The execution section executes an adaptive cruise control based on a surrounding environment information of the motorcycle. The execution section, in the adaptive cruise control, controls a speed of the motorcycle automatically without an acceleration operation or a deceleration operation by a rider of the motorcycle to keep a distance between the motorcycle and a target vehicle at a target distance. The acquisition section acquires an image data based on a detection result output from a camera mounted to a subject vehicle. The image data captures another vehicle traveling in a group ride in which a group of motorcycles including the subject vehicle and the other vehicle is traveling in a group. The identification section identifies the other vehicle based on the image data acquired by the acquisition section. The execution section executes a group ride mode, which is a mode of the adaptive cruise control and is executed during the group ride, based on a travel state information of the other vehicle identified by the identification section.

As one aspect of the present invention, a control method for maneuvering a motorcycle includes executing, using an execution section of a controller, an adaptive cruise control based on a surrounding environment information of the motorcycle, the execution section, in the adaptive cruise control, configured to control a speed of the motorcycle automatically without an acceleration operation or a deceleration operation by a rider of the motorcycle to keep a distance between the motorcycle and a target vehicle at a target distance. The control method further includes: acquiring, using an acquisition section of the controller, an image data based on a detection result output from a camera mounted to a subject vehicle, the image data that captures another vehicle traveling in a group ride in which a group of motorcycles including the subject vehicle and the other vehicle is traveling in a group; and identifying, using an identification section of the controller, the other vehicle based on the image data acquired by the acquisition section, and the execution section executes a group ride mode, which is a mode of the adaptive cruise control and is executed during the group ride, based on a travel state information of the other vehicle identified by the identification section.

In both aspects, information specific to the other vehicle based on the image data is extracted and the other vehicle is identified by comparing the vehicle specific information to a group-vehicle specific information that is information specific to vehicles included in the group and that is obtained in advance. Advantageous Effects of Invention

According to the controller and the control method of the present invention, the execution section executes an adaptive cruise control based on a surrounding environment information of the motorcycle. The execution section, in the adaptive cruise control, controls a speed of the motorcycle automatically without an acceleration operation or a deceleration operation by a rider of the motorcycle to keep a distance between the motorcycle and a target vehicle at a target distance. The acquisition section acquires an image data based on a detection result output from a camera mounted to a subject vehicle. The image data captures another vehicle traveling in a group ride in which a group of motorcycles including the subject vehicle and the other vehicle is traveling in a group. The identification section identifies the other vehicle based on the image data acquired by the acquisition section. The execution section executes a group ride mode, which is a mode of the adaptive cruise control and is executed during the group ride, based on a travel state information of the other vehicle identified by the identification section. Therefore, during the group ride, the group ride mode can be executed appropriately based on traffic conditions around the subject vehicle. As such, the adaptive cruise control can be executed appropriately during the group ride.

### Brief Description of Drawings

Fig. 1 is a schematic view illustrating an outline configuration of a motorcycle according to an embodiment of the present invention.
Fig. 2 is a block diagram illustrating an exemplary functional configuration of a controller according to the embodiment of the present invention.
Fig. 3 is a view illustrating a situation where the motorcycle is traveling in a group including the motorcycle according to the embodiment of the present invention.
Fig. 4 is a flowchart illustrating an example of a processing procedure of the group ride and is executed by the controller according to the embodiment of the present invention.
Fig. 5 is a view illustrating a situation where the group including the motorcycle according to the embodiment of the present invention travels straight.
Fig. 6 is a view illustrating a situation where the group including the motorcycle according to the embodiment of the present invention travels a curve.
Fig. 7 is a view illustrating a situation where a detection range of a surrounding environment information, which is used for adaptive cruise control executed by the motorcycle according to the embodiment of the present invention, is changed. Description of Embodiments

A description will hereinafter be made on a controller according to the present invention with reference to the drawings.

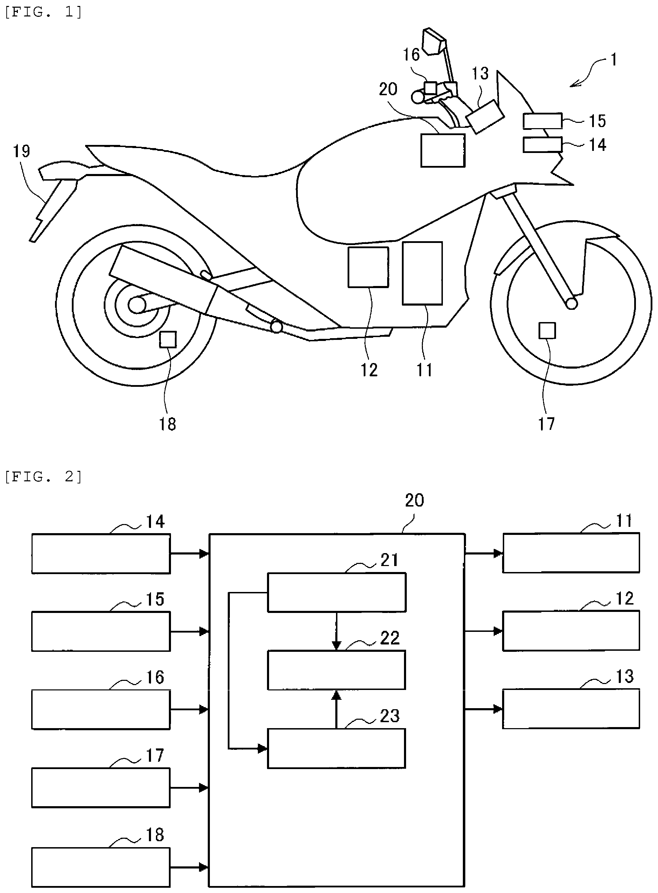

A description will hereinafter be made on a controller that is used for a two-wheeled motorcycle (see a motorcycle 1 in Fig. 1). However, the controller according to the present invention may be used for a motorcycle other than the two-wheeled motorcycle (for example, a three-wheeled motorcycle or the like). The motorcycles include: a vehicle that has an engine as a propelling source; a vehicle that has an electric motor as the propelling source; and the like, and examples of the motorcycles are a bike, a scooter, and an electric scooter.

In addition, a description will hereinafter be made on a case where the engine (more specifically, an engine 11 in Fig. 1, which will be described below) is mounted as a drive source that can output power for driving a wheel. However, as the drive source, a drive source other than the engine (for example, an electric motor) may be mounted, or plural drive sources may be mounted.

A configuration, operation, and the like, which will be described below, merely constitute one example. The controller and the control method according to the present invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Motorcycle>

A description will be made on a configuration of the motorcycle 1 according to an embodiment of the present invention with reference to Fig. 1 to Fig. 3.

Fig. 1 is a schematic view illustrating an outline configuration of the motorcycle 1. As illustrated in Fig. 1, the motorcycle 1 includes the engine 11, a hydraulic pressure control unit 12, a display device 13, a surrounding environment sensor 14, a camera 15, an input device 16, a front-wheel rotational frequency sensor 17, a rear-wheel rotational frequency sensor 18, a license plate 19, and a controller (ECU) 20. In the present specification, the motorcycle 1 will also be referred to as an subject vehicle 1.

The engine 11 corresponds to an example of the drive source of the motorcycle 1 and can output the power for driving the wheel. For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount for the combustion chamber varies according to a throttle opening amount as an opening degree of the throttle valve.

The hydraulic pressure control unit 12 is a unit that has a function of controlling a braking force to be generated on the wheel. For example, the hydraulic pressure control unit 12 includes components (for example, a control valve and a pump) that are provided to an oil channel connecting a master cylinder and a wheel cylinder and control a brake hydraulic pressure in the wheel cylinder. The braking force to be generated on the wheel is controlled by controlling operation of the components in the hydraulic pressure control unit 12. Here, the hydraulic pressure control unit 12 may control the braking force to be generated on each of a front wheel and a rear wheel or may only control the braking force to be generated on one of the front wheel and the rear wheel.

The display device 13 has a display function of visually displaying information. Examples of the display device 13 are a liquid-crystal display and a lamp.

The surrounding environment sensor 14 detects a surrounding environment information that is information related to an environment around the motorcycle 1. More specifically, the surrounding environment sensor 14 is provided to a front portion of a trunk of the motorcycle 1, and detects the surrounding environment information in front of the subject vehicle 1.

The surrounding environment information detected by the surrounding environment sensor 14 may be information on a distance to or an orientation of a target object located around the motorcycle 1 (for example, a relative position, a relative distance, a relative speed, relative acceleration, or the like), or may be a characteristic of the target object located around the motorcycle 1 (for example, a type of the target object, a shape of the target object itself, a mark on the target object, or the like). Examples of the surrounding environment sensor 14 are a radar, a Lidar sensor, an ultrasonic sensor, and a camera.

The camera 15 is provided to the front portion of the trunk of the motorcycle 1 and faces the front. The camera 15 captures an image in front of the motorcycle 1. Hereinafter, a description will mainly be made on an example in which the camera 15 capturing the image in front of the motorcycle 1 is provided to the motorcycle 1. However, as will be described below, an imaging direction of the camera 15 is not limited to the front of the motorcycle 1. The camera 15 may also function as the surrounding environment sensor 14. In such a case, the function of the camera 15 and the function of the surrounding environment sensor 14 can be implemented by the same device.

The input device 16 accepts various operations by the rider. For example, the input device 16 is provided to a handlebar and includes a push button and the like used for an operation by the rider. Information on the rider's operation using the input device 16 is output to the controller 20.

The front-wheel rotational frequency sensor 17 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 17 may detect another physical quantity that can substantially be converted to the rotational frequency of the front wheel. The front-wheel rotational frequency sensor 17 is provided to the front wheel.

The rear-wheel rotational frequency sensor 18 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 18 may detect another physical quantity that can substantially be converted to the rotational frequency of the rear wheel. The rear-wheel rotational frequency sensor 18 is provided to the rear wheel.

The license plate 19 is provided to a rear portion of the trunk of the motorcycle 1. The license plate 19 displays an identification number specifically assigned to each vehicle.

The controller 20 maneuvers the motorcycle 1. For example, the controller 20 is partially or entirely constructed of a microcomputer, a microprocessor unit, or the like. Alternatively, the controller 20 may partially or entirely be constructed of one whose firmware and the like can be updated, or may partially or entirely be a program module or the like that is executed by a command from a CPU or the like, for example. The controller 20 may be provided as one unit or may be divided into multiple units, for example.

Fig. 2 is a block diagram illustrating an exemplary functional configuration of the controller 20. As illustrated in Fig. 2, the controller 20 includes an acquisition section 21, an execution section 22, and an identification section 23, for example. In addition, the controller 20 communicates with each device of the motorcycle 1.

The acquisition section 21 acquires information from each of the devices of the motorcycle 1, and outputs the acquired information to the execution section 22 and the identification section 23. For example, the acquisition section 21 acquires the information from the surrounding environment sensor 14, the camera 15, the input device 16, the front-wheel rotational frequency sensor 17, and the rear-wheel rotational frequency sensor 18. In the present specification, the acquisition of the information can include extraction, generation, and the like of the information.

The camera 15 captures an image including another vehicle that is traveling in a group including the subject vehicle 1 in the group ride and outputs the captured image as an image data. The acquisition section 21 receives the image data from the camera 15. The identification section 23 uses the image data in an identification processing in which the other vehicle is identified.

The execution section 22 executes various types of control by controlling operation of each of the devices of the motorcycle 1. For example, the execution section 22 controls the operation of the engine 11, the hydraulic pressure control unit 12, and the display device 13.

Here, the execution section 22 can execute an adaptive cruise control. In the adaptive cruise control, the execution section 22 automatically controls a speed of the motorcycle 1 without an acceleration operation or a deceleration operation performed by the rider, i.e., without the rider's operation of an accelerator or a brake. The execution section 22 monitors a value of the speed of the motorcycle 1 that is acquired based on the rotational frequency of the front wheel and the rotational frequency of the rear wheel, and can thereby control the speed of the motorcycle 1 to a speed that does not exceed a preset upper-limit speed, for example.

In addition, in the adaptive cruise control, the execution section 22 executes a distance control to maintain a distance (i.e., an inter-vehicular distance) between the motorcycle 1 and a target vehicle to a target distance. The execution section 22 executes the distance control based on the surrounding environment information detected by the surrounding environment sensor 14. The surrounding environment sensor 14 can detect a distance between the motorcycle 1 and a preceding vehicle that travels ahead of the motorcycle 1. The surrounding environment sensor 14 also can detect a relative speed of the motorcycle 1 with respect to the preceding vehicle. For example, during the distance control, the execution section 22 sets the preceding vehicle as the target vehicle and controls the speed of the motorcycle 1 to keep the distance between the motorcycle 1 and the target vehicle at the target distance. Here, the distance may be a distance in a direction along a lane (more specifically, a travel lane of the motorcycle 1) or may be a straight-line distance.

For example, the execution section 22 executes the adaptive cruise control in response to the rider's operation using the input device 16. Here, the rider can select a group ride mode as one mode of the adaptive cruise control for the motorcycle 1. When rider selects the group ride mode, the execution section 22 executes the group ride mode. The group ride mode is selected and executed during the group ride. That is, the group ride mode is one of various modes of the adaptive cruise control that is executed during the group ride. In the adaptive cruise control, the group ride mode is a mode that is particularly suitable for the group ride. For example, in the group ride mode, a short distance is set as the target distance during the distance control.

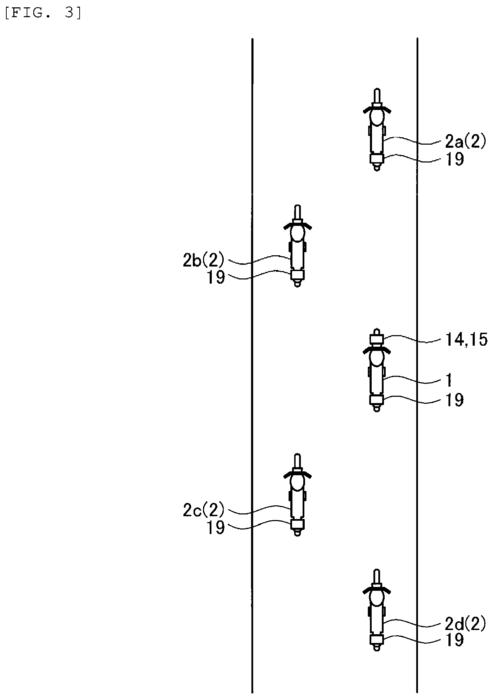

The identification section 23 identifies the other vehicle based on the image data capturing the other vehicle that is traveling in the group including the subject vehicle 1. The identification section 23 outputs an identification result to the execution section 22. In the group ride, a group of motorcycles travels while forming at least two convoys. A description will hereinafter be made on an overview of the group ride with reference to Fig. 3.

Fig. 3 is a view illustrating a situation where the group of the motorcycles including the motorcycle 1 (i.e., the subject vehicle 1) is traveling during the group ride. Fig. 3 illustrates the subject vehicle 1 and other vehicles 2. The other vehicles 2 are included in the group of the vehicles and are vehicles other than the subject vehicle 1. The other vehicles 2 includes another vehicle 2a, another vehicle 2b and another vehicle 2c.

For an example illustrated in Fig. 3, during the group ride, the motorcycles travel forming two convoys of a left convoy and a right convoy inside the same travel lane. According to the example illustrated in Fig. 3, the other vehicle 2b and the other vehicle 2c form the left convoy. The other vehicle 2b and the other vehicle 2c are arranged in this order from the front. The other vehicle 2a, the subject vehicle 1 and the other vehicle 2d form the right convoy. The other vehicle 2a, the subject vehicle 1 and the other vehicle 2d are arranged in this order from the front in a front-rear direction.

In addition, as illustrated in Fig. 3, during the group ride, the motorcycles travel such that the motorcycles forming the left convoy and the motorcycles forming the right convoy are alternately arranged in the front-rear direction (that is, in zigzag arrangement). In the example illustrated in Fig. 3, the other vehicle 2a in the right convoy, the other vehicle 2b in the left convoy, the subject vehicle 1 in the right convoy, the other vehicle 2c in the left convoy, and the other vehicle 2d in the right convoy are arranged in this order from the front.

As described above, during the group ride in which the motorcycles travel in the group, the motorcycles form the zigzag arrangement. Accordingly, a distance between adjacent two motorcycles in the front-rear direction can be shortened as compared to a case where the motorcycles travels forming a single convoy. Thus, it is possible to suppress the group from being divided due to a traffic light.

According to the present embodiment, the group ride mode is performed, during the group ride, as one modes of the adaptive cruise control. The execution section 22 executes the group ride mode based on a travel state information of the other vehicle 2 identified by the identification section 23. Here, the identification section 23 identifies the other vehicle 2 based on the image data capturing the other vehicle 2. In this way, the adaptive cruise control is appropriately executed in the motorcycle 1 during the group ride. Here, the travel state information can include various types of information on vehicle travel states. The vehicle travel states are, for example, a position, a speed and/or acceleration of a vehicle. Such processing executed by the controller 20 during the group ride will be described below in detail.

### <Operation of Controller>

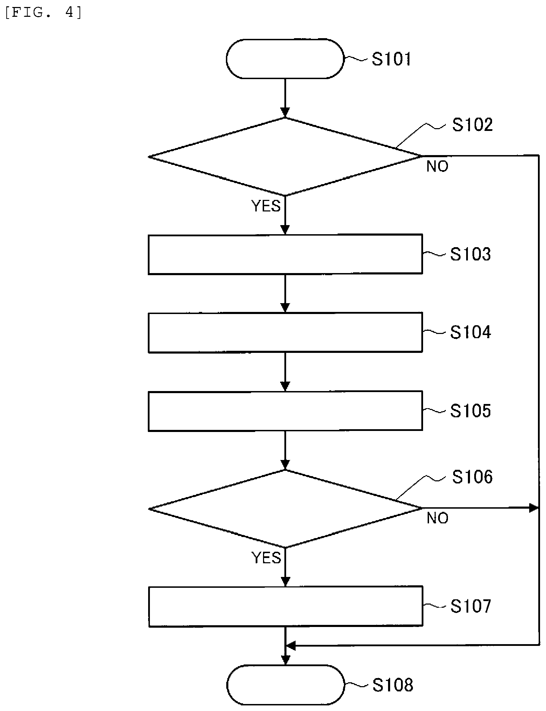

A description will be made on operation of the controller 20 according to the embodiment of the present invention with reference to Fig. 4 to Fig. 7.

As described above, the identification section 23 identifies the other vehicle 2 based on the image data capturing the other vehicle 2. More specifically, the identification section 23 extracts information which is specific to the other vehicle 2 based on the image data capturing the other vehicle 2. The information specific to the other vehicle 2 will be referred to as a vehicle specific information in the present invention. The identification section 23 identifies the other vehicle 2 by comparing the vehicle specific information of the other vehicle 2 with a set of group-vehicle specific information about vehicles forming the group. The set of group-vehicle specific information is obtained in advance. Each vehicle of the vehicles in the group has its own group-vehicle specific information.

However, there may be a situation where the other vehicle 2 is not captured in the image data. As such, the identification section 23 extracts, as the vehicle specific information, information about a candidate vehicle captured in the image data. The candidate vehicle is, in other words, a candidate to be identified as the other vehicle 2. Subsequently, the identification section 23 identifies the candidate vehicle as the other vehicle 2 when the extracted vehicle specific information about the candidate vehicle corresponds to or similar to the group-vehicle specific information.

The vehicle specific information is assigned to each vehicle. In other words, the each vehicle can be recognized based on the vehicle specific information. With reference to a control flow shown in Fig. 4, an example of using information of the license plate 19 as the vehicle specific information. The information of the license plate 19 will be referred to as a license plate information. However, it should be understood that the identification section 23 may execute an identification processing to identify the vehicle 2 by using another vehicle specific information other than the license plate information.

Fig. 4 is a flowchart illustrating an example of a processing procedure that is related to the group ride and is executed by the controller 20. The control flow illustrated in Fig. 4 is repeatedly executed at a time interval, which is set in advance, for example. Step S101 in Fig. 4 corresponds to initiation of the control flow illustrated in Fig. 4. Step S108 in Fig. 4 corresponds to termination of the control flow illustrated in Fig. 4.

When the control flow illustrated in Fig. 4 is initiated, in step S102, the controller 20 determines whether the group ride mode is currently executed. If it is determined that the group ride mode is currently executed (step S102/YES), the processing proceeds to step S103. On the other hand, if it is determined that the group ride mode is not currently executed (step S102/NO), the control flow illustrated in Fig. 4 is terminated.

If it is determined YES in step S102, in step S103, the acquisition section 21 of the controller 20 acquires the image data based on the output result of the camera 15. In this way, the acquisition section 21 can acquire the image data capturing the other vehicle 2 based on the output result of the camera 15.

In detail, in step S103, the acquisition section 21 acquires the image data regardless of whether the other vehicle 2 is captured in the image data acquired by the camera 15. When the other vehicle 2 is located within a field of view of the camera 15, the other vehicle 2 is captured in the acquired image data. When the other vehicle 2 is not located within the field of view of the camera 15, the other vehicle 2 is not captured in the acquired image data. At a time point of step S103, the vehicle captured in the image data is merely the candidate vehicle (i.e., the candidate for the other vehicle 2). In other words, the vehicle captured in the image data is possibly the other vehicle 2 or is possibly a vehicle outside the group.

Next, in step S104, the identification section 23 of the controller 20 extracts, as the vehicle specific information, the license plate information of the vehicle that is captured in the image data based on the image data acquired in step S103. For example, the identification section 23 extracts the candidate vehicle from the image data acquired in step S103, and then extracts the license plate information from an area of the image data where the candidate vehicle is captured.

The license plate information is information on the identification number that is displayed on the license plate 19. By executing image processing on the acquired image data, the identification section 23 can recognize the identification number that is displayed on the license plate 19 of the candidate vehicle captured in the image data. More specifically, the identification section 23 can recognize the identification number on the license plate 19 that is captured in the image data by using a method such as pattern matching processing.

Next, in step S105, the identification section 23 of the controller 20 executes the identification processing to identify the other vehicle 2. In the identification processing, the identification section 23 identifies the other vehicle 2 by comparing the license plate information that is extracted in step S104 (that is, the vehicle specific information) to the license plate information of each of the vehicles forming the group that is acquired in advance. According to this example, the group-vehicle specific information is the license plate information.

Here, prior to the execution of the control flow illustrated in Fig. 4, the acquisition section 21 acquires, as the group-vehicle specific information, the license plate information of each of the vehicles in the group. For example, the rider of the subject vehicle 1 may store information by a setting operation, and the acquisition section 21 acquires, as the group-vehicle specific information, the license plate information of each of the vehicles in the group based on the information stored by the rider. The setting operation is an operation to set various types of the information, and is accepted by the input device 16, for example. For example, before the group including the subject vehicle 1 starts off, the rider uses the input device 16 to enter the information on the identification number on the license plate 19 of each of the vehicles in the group. The thus-entered information is stored as the group-vehicle specific information in a storage element of the controller 20.

An input screen that accepts the setting operation may be displayed on the display device 13, and the setting operation may be performed by using the input screen. Alternatively, the setting operation may be performed by using a worn article by the rider (for example, a helmet or the like) or a wireless terminal carried by the rider (for example, a smartphone or the like) instead of the input device 16 mounted to the motorcycle 1. The setting operation may be an operation performed by the rider's finger or may be an operation by voice input.

In the case where the license plate information that is extracted from the image data matches or is similar to any piece of the license plate information of the vehicles in the group, which is acquired in advance as the group-vehicle specific information, the identification section 23 identifies the vehicle captured in the image data as the other vehicle 2. Here, such a case is assumed that the license plate information extracted from the image data is only a part of the identification number on the license plate 19 that is captured in the image data. For example, such a case is assumed that the number of digits of the identification number indicated by the extracted license plate information is smaller than the number of digits of the identification number actually displayed on the license plate 19. In this case, in the case where the identification number that partially matches the identification number extracted from the image data exists among the identification numbers stored as the group-vehicle specific information, the identification section 23 may identify the vehicle captured in the image data as the other vehicle 2.

According to the above-described examples, the license plate information of each of the vehicles in the group is acquired as the group-vehicle specific information based on the information on the setting operation by the rider of the subject vehicle 1. However, the acquisition section 21 may automatically acquire, as the group-vehicle specific information, the license plate information of each of the vehicles in the group regardless of the setting operation by the rider of the subject vehicle 1. For example, as separate processing from the control flow illustrated in Fig. 4, the acquisition section 21 extracts the license plate information from the image data that is acquired by the camera 15 during the travel. Then, in the case where the same license plate information is continuously extracted for or over a specified period, the acquisition section 21 acquires such license plate information as the group-vehicle specific information. In this way, the group-vehicle specific information may automatically be acquired and constructed.

Next, in step S106, the controller 20 determines whether the other vehicle 2 is identified by the identification section 23. If it is determined that the other vehicle 2 is identified by the identification section 23 (step S106/YES), the processing proceeds to step S107. On the other hand, if it is determined that the other vehicle 2 is not identified by the identification section 23 (step S106/NO), the control flow illustrated in Fig. 4 is terminated.

If it is determined YES in step S106, in step S107, the execution section 22 of the controller 20 executes the group ride mode based on the travel state information of the other vehicle 2 identified by the identification section 23, and the control flow illustrated in Fig. 4 is terminated.

In this embodiment, the other vehicle 2 is identified by the identification section 23 based on the image data capturing the other vehicle 2. For example, the acquisition section 21 can acquire the travel state information of the other vehicle 2 identified by the identification section 23 based on the output result of the surrounding environment sensor 14. Accordingly, the execution section 22 can execute the group ride mode based on the travel state information of the other vehicle 2 identified by the identification section 23. Here, for example, in the case where it is attempted to identify the other vehicle 2 based on the surrounding environment information acquired by the radar, the vehicle outside the group is possibly identified as the other vehicle 2. However, in this embodiment, since the other vehicle 2 is identified based on the image data that is acquired by the camera 15, the other vehicle 2 can appropriately be identified. Therefore, in the case where the group ride is made, the group ride mode can appropriately be executed according to a traffic condition around the subject vehicle 1.

Here, from a perspective of further appropriately executing the group ride mode according to the traffic condition around the subject vehicle 1, the execution section 22 preferably executes the group ride mode based on the travel state information of the plural other vehicles 2. For example, in the group ride mode, the execution section 22 executes the distance control based on the travel state information of the plural other vehicles 2. A description will hereinafter be made on an example in which the distance control is executed based on the travel state information of the plural other vehicles 2.

Hereinafter, the convoy in which the subject vehicle 1 is located in the group will also be referred to as a subject convoy. The other vehicles 2 in the subject convoy (the other vehicle 2a and the other vehicle 2d in the example illustrated in Fig. 3) will also be referred to as subject-convoy vehicles. A convoy other than the subject convoy will also be referred to as another convoy. The other vehicles 2 in the other convoy (the other vehicle 2b and the other vehicle 2c in the example illustrated in Fig. 3) will also be referred to as other-convoy vehicles. For example, the execution section 22 can distinguish the subject-convoy vehicle and the other-convoy vehicle from each other based on the relative position of the other vehicle 2, which is identified by the identification section 23, with respect to the subject vehicle 1.

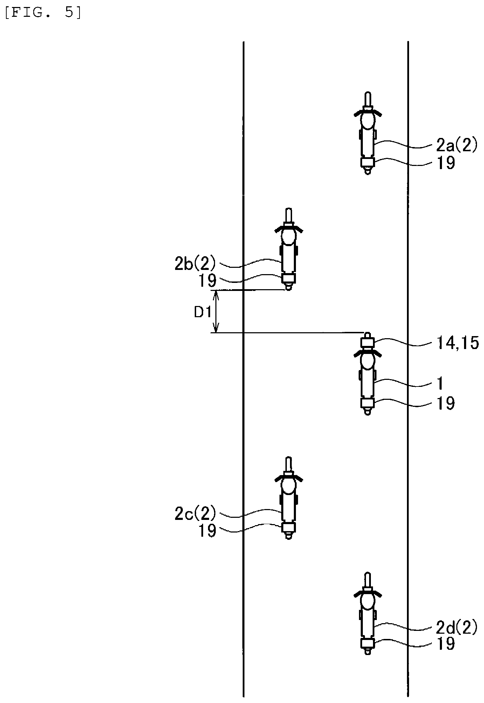

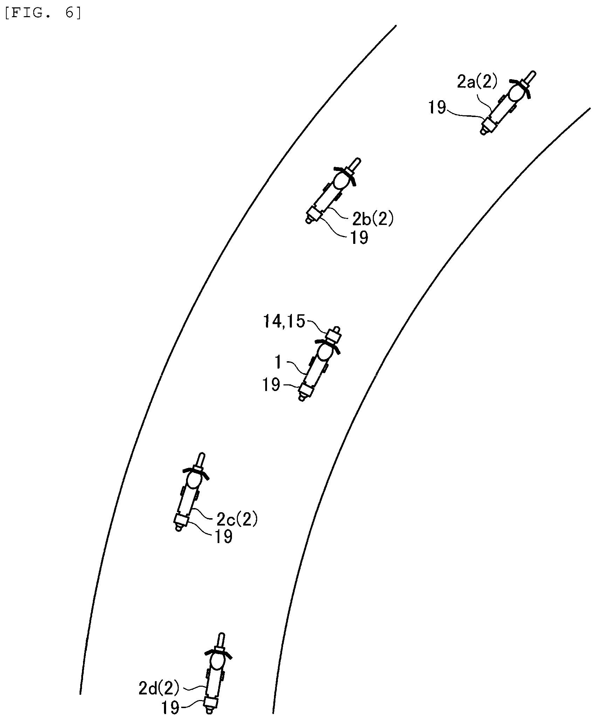

In the group ride mode, the execution section 22 may set the target vehicle for the distance control based on the travel state information of the other vehicle 2 identified by the identification section 23. For example, during the group ride mode, the execution section 22 may set the subject-convoy vehicle as the target vehicle for the distance control and, under a particular situation, may switch the target vehicle from the subject-convoy vehicle to the other-convoy vehicle. A description will hereinafter be made on an example of a situation where the target vehicle is switched with reference to Fig. 5 and Fig. 6.

Fig. 5 is a view illustrating a situation where the group including the motorcycle 1 (i.e., the subject vehicle 1) travels straight. In the example illustrated in Fig. 5, the subject vehicle 1 and the other vehicles 2a, 2b, 2c, 2d travel on a straight road in the same arrangement as that in Fig. 3. The straight road is a travel road having a curvature radius that is large to such an extent of not affecting a driving operation of the motorcycle 1. The subject convoy is the right convoy, and the other convoy is the left convoy. The other vehicles 2a, 2d correspond to the subject-convoy vehicles, and the other vehicles 2b, 2c correspond to the other-convoy vehicles.

According to an example illustrated in Fig. 5, the execution section 22 sets the other vehicle 2a as the target vehicle of the distance control. The other vehicle 2a is included in the subject-convoy vehicles located in front of the subject vehicle 1 and is closest to the subject vehicle among the subject-convoy vehicles located in front of the subject vehicle 1. According to this example, a distance between the subject vehicle 1 and the other vehicle 2a is kept at the target distance.

Here, there is a situation where a distance between the subject vehicle 1 and the other-convoy vehicle falls below a lower limit distance, i.e., the distance between the subject vehicle 1 and the other-convoy vehicle may fall below the lower limit distance. When the distance between the subject vehicle 1 and the other-convoy vehicle may fall below the lower limit distance, the execution section sets the other-convoy vehicle as the target vehicle of the distance control. According to the example illustrated in Fig. 5, the execution section 22 switches the target vehicle from the other vehicle 2a to the other vehicle 2b when a distance D1 between the subject vehicle 1 and the other vehicle 2b. The other vehicle 2b is one of preceding other-convoy vehicles located in front of the subject vehicle 1 and is closest to the subject vehicle 1 among the preceding other-convoy vehicles. The lower limit distance is set to a distance, e.g., at which the subject vehicle 1 approaches to the other vehicle 2b and possibly passes through the other vehicle 2b.

Once the other vehicle 2b is set as the target vehicle, the distance D1 between the subject vehicle 1 and the other vehicle 2b is maintained to the target distance. More specifically, during the distance control, the execution section 22 controls the speed of the subject vehicle 1 based on the distance D1 and a relative speed of the subject vehicle 1 with respect to the other vehicle 2b. As a result, the subject vehicle 1 is suppressed from passing through the other vehicle 2b. Thus, the state where the group including the subject vehicle 1 travels in the zigzag arrangement is maintained.

Fig. 6 is a view illustrating a situation where the motorcycle 1 (i.e., the subject vehicle 1) is traveling in the group during the group ride and is turning a curve. According to the example illustrated in Fig. 6, the subject vehicle 1 and the other vehicles 2a, 2b, 2c, 2d are traveling on a curved road in the same arrangement as that in Fig. 3. Here, the curved road is a travel road having a curvature radius that is small to such an extent of affecting the driving operation of the motorcycle 1. The subject convoy is the right convoy, and the other convoy is the left convoy. The other vehicles 2a, 2d correspond to the subject-convoy vehicles, and the other vehicles 2b, 2c correspond to the other-convoy vehicles.

When the group of the vehicles including the subject vehicle 1 is turning a curve (i.e., is in the curve), the execution section 22 sets the other-convoy vehicle as the target vehicle of the distance control. Here, a situation where the group of the vehicles, which is traveling straight while the other vehicle 2a is being set as the target vehicle, starts turning a curve as shown in Fig. 6 is considered. In this situation, the execution section 22 sets the other vehicle 2b as the target vehicle. The other vehicle 2b is one of preceding other-convoy vehicles located in front of the subject vehicle 1 and is closest to the subject vehicle 1 among the preceding other-convoy vehicles. That is, the target vehicle is switched from the other vehicle 2a to the other vehicle 2b.

For example, the execution section 22 determines whether the subject vehicle 1 is traveling the curve. Then, when determining that the subject vehicle 1 is traveling the curve, the execution section 22 can consider that the group including the subject vehicle 1 is traveling the curve. The determination on whether the subject vehicle 1 is traveling the curve can be made by using an inertial measurement unit (IMU), a car navigation system, or the like, for example.

For a purpose of securing safety, a distance between each adjacent two vehicles when the group including the subject vehicle 1 is turning a curve tends to be long as compared to a distance between each adjacent two vehicles when the group is traveling straight. As such, according to the example shown in Fig. 6, the other vehicle 2a may go away from the subject vehicle 1 and the surrounding environment sensor 14 may not be able to detect the other vehicle 2a. Therefore, the other vehicle 2b is set as the target vehicle to avoid a situation where no vehicle is set as the target vehicle.

Here, when it is considered to improve the safety, the target distance for the distance control while the group of vehicles including the subject vehicle 1 is turning a curve is preferably increased as compared to the target distance for the distance control while the group of vehicles is traveling straight. For securing the safety, a distance between adjacent two vehicles in the group while the group of the vehicles is turning a curve is preferable increased as compared to a distance between adjacent two vehicles in the group while the group of the vehicles is traveling straight. As such, the target distance for the distance control is changed based on whether the group of the vehicles is turning a curve so that the safety is improved.

In the group ride mode, the execution section 22 may set the target distance for the distance control based on the travel state information of the other vehicle 2 identified by the identification section 23.

For example, the execution section 22 may change the target distance for the distance control based on the relative position of the other vehicle 2, which is identified by the identification section 23, to the subject vehicle 1.

More specifically, the execution section 22 may change the target distance according to a distance between the subject vehicle 1 and the other-convoy vehicle along a vehicle width direction. For example, according to the example illustrated in Fig. 3, when the other vehicle 2a is set as the target vehicle of the distance control, the execution section 22 may increase the target distance as the distance between the subject vehicle 1 and the other-convoy vehicle along the vehicle width direction becomes short. The target distance is set to a target value of a distance between the subject vehicle 1 and the other vehicle 2a. As a result, it is possible to prevent the vehicles in the group from approaching too close to each other. Thus, the formation of the group including the subject vehicle 1 can be easily maintained to the zigzag arrangement.

As described later, when the information other than the license plate information is used as the vehicle specific information, the camera 15 may be used to identify the other vehicle 2. The camera 15 can capture an image behind the motorcycle 1. The identification section 23 can also identify the other vehicle 2, which is located behind the subject vehicle 1, based on the image data acquired by the camera 15. In this case, the execution section 22 may change the target distance based on the distance between the subject vehicle 1 and the other vehicle 2 located behind the subject vehicle 1. According to the example illustrated in Fig. 3, when the other vehicle 2b is set as the target vehicle for the distance control, the execution section 22 may increase the target distance between the subject vehicle 1 and the other vehicle 2b as the distance between the subject vehicle 1 and the other vehicle 2c increases. The target distance is, in other words, a target value for a distance between the subject vehicle 1 and the other vehicle 2b. Accordingly, a distance between adjacent two vehicles in the group can be uniformed, and therefore the formation of the group including the subject vehicle 1 can be easily maintained to the zigzag arrangement.

For example, the execution section 22 may change the target distance of the distance control based on a positional relationship between the other vehicles 2 identified by the identification section 23. More specifically, the execution section 22 may set the target distance of the distance control based on a distance between adjacent two vehicles of the other vehicles 2. According to the example illustrated in Fig. 3, when the other vehicle 2a is set as the target vehicle of the distance control, the execution section 22 may set the target distance between the subject vehicle 1 and the other vehicle 2a so that the target distance is close to a distance between the other vehicle 2b and one vehicle (not shown) of preceding left-convoy vehicles 2 located in front of the other vehicle 2b in the left convoy. As a result, it is possible to make a distance between each adjacent two vehicles in the group. Thus, the formation of the group including the subject vehicle 1 can be easily maintained to the zigzag arrangement.

The above description has been made on the example in which the group ride mode is executed based on the travel state information of the plural other vehicles 2. However, the execution section 22 may execute the group ride mode based on the travel state information of the single other vehicle 2. For example, in the group ride mode, regardless of the situation whether the group is traveling the curve, or the like, the execution section 22 may set one of the other vehicle 2a and the other vehicle 2b as the target vehicle for the distance control.

The above description has been made on the example in which, in the group ride mode, the distance control is executed based on the travel state information of the other vehicle 2 identified by the identification section 23. However, in the group ride mode, the execution section 22 may execute processing other than the distance control based on the travel state information of the other vehicle 2 identified by the identification section 23.

For example, the execution section 22 may change a detection range of the surrounding environment information used for the adaptive cruise control based on the relative position of the other vehicle 2, which is identified by the identification section 23, with respect to the subject vehicle 1. More specifically, the execution section 22 determines whether the subject-convoy is the left convoy or the right convoy based on the relative position of the other vehicle 2 with respect to the subject vehicle 1. Then, based on the determination result of the determination whether the subject convoy is the left convoy or the right convoy, the execution section 22 changes the detection range of the surrounding environment information detected by the surrounding environment sensor 14.

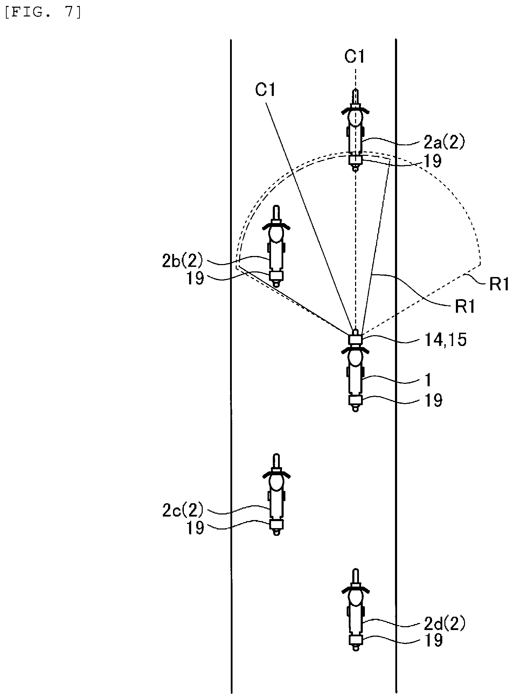

Fig. 7 is a view illustrating a situation where the detection range of the surrounding environment information, which is used for the adaptive cruise control executed by the motorcycle 1, is changed. In Fig. 7, a detection range R1 of the surrounding environment sensor 14 before the change is indicated by broken lines, and the detection range R1 after the change is indicated by solid lines.

As illustrated in Fig. 7, the detection range R1 of the surrounding environment sensor 14 expands radially to the front from a front portion of the motorcycle 1. The surrounding environment sensor 14 can detect the surrounding environment information within the detection range R1. That is, the detection range of the surrounding environment information detected by the surrounding environment sensor 14 basically matches the detection range R1 of the surrounding environment sensor 14. However, as will be described below, the detection range of the surrounding environment information detected by the surrounding environment sensor 14 can be changed without changing the detection range R1 of the surrounding environment sensor 14. Thus, these ranges will be distinguished from each other for the description.

For example, the execution section 22 changes the detection range R1 of the surrounding environment sensor 14, and thereby changes the detection range of the surrounding environment information detected by the surrounding environment sensor 14. More specifically, the execution section 22 places a center C1 of the detection range R1 of the surrounding environment sensor 14 on a side of a travel path of the subject vehicle 1 where the other-convoy vehicle is located. The center C1 of the detection range R1 may be, e.g., a center axis of a range expanding radially.
As a result, a center of the detection range of the surrounding environment information detected by the surrounding environment sensor 14 is located on the side of the travel path of the subject vehicle 1 where the other-convoy vehicle is located. Here, before the detection range R1 is changed, the center C1 of the detection range R1 is located on the travel path of the subject vehicle 1 as indicated by a broken line.

According to an example illustrated in Fig. 7, the other vehicle 2b is identified by the identification section 23, and the execution section 22 determines that the subject convoy is the right convoy based on the relative position of the other vehicle 2b with respect to the subject vehicle 1. In this case, as indicated by a solid line, the execution section 22 places the center C1 of the detection range R1 of the surrounding environment sensor 14 on the left side of the travel path of the subject vehicle 1, i.e., on the side where the other vehicles 2b, 2c as the other-convoy vehicles are located. As a result, the center of the detection range of the surrounding environment information detected by the surrounding environment sensor 14 is located on the left side of the travel path of the subject vehicle 1. Thus, as indicated by the solid lines in Fig. 7, the detection range R1 of the surrounding environment sensor 14 can be placed within the travel lane of the subject vehicle 1. The detection range R1 of the surrounding environment sensor 14 is, in other words, the detection range of the surrounding environment information detected by the surrounding environment sensor 14. As result, it can be prevented that an unexpected vehicle is set as the target vehicle of the distance control, e.g., when the unexpected vehicle comes into the detection range R1. For example, the unexpected vehicle may be a vehicle traveling in an adjacent travel lane which is located adjacent to the subject lane in which the subject vehicle 1 is traveling.

Here, the execution section 22 may change the detection range of the surrounding environment information detected by the surrounding environment sensor 14 without changing the detection range R1 of the surrounding environment sensor 14. For example, the execution section 22 may change the detection range of the surrounding environment information by not detecting, as the surrounding environment information, information on a particular range (for example, in the example illustrated in Fig. 7, a right range with the swept path of the subject vehicle 1 being the reference) within the detection range R1.

According to the above-described example with reference to the control flow illustrated in Fig. 4, the license plate information is used as the vehicle specific information. However, the identification section 23 may execute the identification processing to identify the other vehicle 2 by using the vehicle specific information other than the license plate information. In other words, information other than the license plate information may be used as the vehicle specific information.

For example, the vehicle specific information may include information about a shape (hereinafter also referred to as a shape information). The shape information is information on a shape of a vehicle body or a shape of the rider, for example. The Information on the shape of the rider can include information on the worn article by the rider in addition to the shape of the rider himself/herself.

When the shape information is used as the vehicle specific information, the identification section 23 executes the image processing on the acquired image data so as to extract the shape information of the vehicle captured in the image data as the vehicle specific information. Then, the identification section 23 identifies the other vehicle 2 by comparing the shape information extracted from the image data to the shape information of each of the vehicles in the group that is acquired in advance as the group-vehicle specific information. More specifically, in the case where the shape information extracted from the image data matches or is similar to any piece of the shape information of the vehicles in the group that is acquired in advance as the group-vehicle specific information, the identification section 23 identifies the vehicle captured in the image data as the other vehicle 2.

In addition, for example, the vehicle specific information may include information on a color (hereinafter also referred to as color information). The color information is information on a color of the vehicle body or a color of the rider, for example. The Information on the color of the rider can include information on a color of the worn article by the rider in addition to the color of the rider himself/herself. The color information can also include information on a color combination (for example, information on a combination of the color of the vehicle body and the color of the worn article by the rider, or the like).

In the case where the color information is used as the vehicle specific information, the identification section 23 executes the image processing on the acquired image data so as to extract the color information of the vehicle captured in the image data as the vehicle specific information. Then, the identification section 23 identifies the other vehicle 2 by comparing the color information extracted from the image data to the color information of each of the vehicles in the group that is acquired in advance as the group-vehicle specific information. More specifically, in the case where the color information extracted from the image data matches or is similar to any piece of the color information of the vehicles in the group that is acquired in advance as the group-vehicle specific information, the identification section 23 identifies the vehicle captured in the image data as the other vehicle 2.

Furthermore, for example, the vehicle specific information may include information on a pattern (hereinafter also referred to as pattern information). The pattern information is information on a pattern of the vehicle body or a pattern of the rider, for example. The Information on the pattern of the rider can include information on a pattern of the worn article by the rider in addition to the pattern of the rider himself/herself.

In the case where the pattern information is used as the vehicle specific information, the identification section 23 executes the image processing on the acquired image data so as to extract the pattern information of the vehicle captured in the image data as the vehicle specific information. Then, the identification section 23 identifies the other vehicle 2 by comparing the pattern information extracted from the image data to the pattern information of each of the vehicles in the group that is acquired in advance as the group-vehicle specific information. More specifically, in the case where the pattern information extracted from the image data matches or is similar to any piece of the pattern information of the vehicles in the group that is acquired in advance as the group-vehicle specific information, the identification section 23 identifies the vehicle captured in the image data as the other vehicle 2.

Moreover, for example, the vehicle specific information may include information on a dimension (hereinafter also referred to as dimension information). The dimension information is information on a dimension of the vehicle and, for example, can include information on a dimension ratio between a height direction and a width direction of the vehicle body, information on a dimension ratio between the vehicle body and the rider, or the like.

In the case where the dimension information is used as the vehicle specific information, the identification section 23 executes the image processing on the acquired image data so as to extract the dimension information of the vehicle captured in the image data as the vehicle specific information. Then, the identification section 23 identifies the other vehicle 2 by comparing the dimension information extracted from the image data to the dimension information of each of the vehicles in the group that is acquired in advance as the group-vehicle specific information. More specifically, in the case where the dimension information extracted from the image data matches or is similar to any piece of the dimension information of the vehicles in the group that is acquired in advance as the group-vehicle specific information, the identification section 23 identifies the vehicle captured in the image data as the other vehicle 2.

In the case where the information other than the license plate information is used as the vehicle specific information, the identification section 23 can extract the vehicle specific information from the image data that is acquired by the camera 15 capturing the image behind or on a side of the motorcycle 1. Just as described, the camera 15 may capture the image behind or on the side of the motorcycle 1. For example, in addition to or instead of the camera 15 that captures the image in front of the motorcycle 1, the camera 15 that captures the image behind the motorcycle 1 may be provided to the motorcycle 1. Alternatively, in addition to or instead of the camera 15 that captures the image in front of the motorcycle 1, the camera 15 that captures the image on the side of the motorcycle 1 may be provided to the motorcycle 1.

In the identification processing of the other vehicle 2, the identification section 23 may use only one type of the vehicle specific information or may use plural types of the vehicle specific information. However, from a perspective of identifying the other vehicle 2 with a high degree of accuracy, the identification section 23 preferably executes the identification processing of the other vehicle 2 by using the plural types of the vehicle specific information.

For example, there is a case where the license plate information and the color information are used as the vehicle specific information in the identification processing of the other vehicle 2. In this case, in the case where the license plate information extracted from the image data matches or is similar to any piece of the license plate information of the vehicles in the group that is acquired in advance as the group-vehicle specific information and where the color information extracted from the image data matches or is similar to any piece of the color information of the vehicles in the group that is acquired in advance as the group-vehicle specific information, the identification section 23 identifies the vehicle captured in the image data as the other vehicle 2.

Here, the identification section 23 may set the type of the vehicle specific information used to identify the other vehicle 2 according to a combination of the motorcycles constituting the group.

For example, in the case where models of all the motorcycles that constitute the group are the same, the other vehicle 2 can be identified with the higher degree of accuracy by using the license plate information as the vehicle specific information than by using the shape information, the color information, the pattern information, or the dimension information as the vehicle specific information. Thus, in this case, the identification section 23 sets the type of the vehicle specific information used to identify the other vehicle 2 to the license plate information, for example. Alternatively, for example, in the case where the colors of the clothing worn by the riders differ in regard to the motorcycles constituting the group, the identification section 23 sets the type of the vehicle specific information used to identify the other vehicle 2 to the color information. In this way, the other vehicle 2 can be identified with the high degree of accuracy.

Regardless of the setting operation by the rider of the subject vehicle 1, the identification section 23 can automatically set the type of the vehicle specific information used to identify the other vehicle 2 according to a combination of the motorcycles constituting the group. For example, the identification section 23 uses the image data acquired by the camera 15 during the travel, and extracts a characteristic (for example, the shape, the color, the pattern, the dimension, or the like) of the vehicle that is assumed as the other vehicle 2 constituting the group. The vehicle that is assumed as the other vehicle 2 may be the vehicle that is identified as the other vehicle 2 by the above-described identification processing, or may be a vehicle that is continuously captured in the image data for or over a specified period. Then, by using an extraction result of the characteristic of the vehicle that is assumed as the other vehicle 2, the identification section 23 can set the type of the vehicle specific information used to identify the other vehicle 2 according to the combination of the motorcycles constituting the group.

In the flowchart, which is illustrated in Fig. 4 and has been described above, if it is determined that the group ride mode is currently executed (step S102/YES), the processing in step S103 onward is executed. However, an execution condition of the processing in step S103 onward is not limited to that in this example. The above execution condition only needs to be a condition with which it is possible to determine that the group including the subject vehicle 1 and the other vehicles 2 makes the group ride. For example, the above execution condition may be such a condition that it is determined that the subject vehicle 1 and the other vehicles 2 travel in the zigzag arrangement, or the like. For example, the controller 20 acquires the information on the positional relationships between the subject vehicle 1 and the other vehicles 2 via wireless communication with the other vehicles 2 or an infrastructure facility, and can thereby determine whether the subject vehicle 1 and the other vehicles 2 travel in the zigzag arrangement by using such information.

### <Effects of Controller>

A description will be made on effects of the controller 20 according to the embodiment of the present invention.

In the controller 20, the execution section 22 executes the group ride mode, which is the mode of the adaptive cruise control executed during the group ride, based on the travel state information of the other vehicle 2 identified by the identification section 23. Here, the identification section 23 identifies the other vehicle 2 based on the image data capturing the other vehicle 2. In this way, for example, compared to the case where it is attempted to identify the other vehicle 2 based on the surrounding environment information acquired by the radar, the other vehicle 2 can appropriately be identified. Thus, in the case where the group ride is made, the group ride mode can appropriately be executed according to the traffic condition around the subject vehicle 1. Therefore, it is possible to appropriately execute the adaptive cruise control of the motorcycle 1 in the group ride.

Preferably, in the controller 20, the execution section 22 executes the group ride mode based on the travel state information of the plural other vehicles 2. In this way, it is possible to execute the group ride mode by using larger pieces of the information on the traffic condition around the subject vehicle 1. Therefore, the group ride mode can further appropriately be executed according to the traffic condition around the subject vehicle 1.

Preferably, in the controller 20, the execution section 22 executes the distance control based on the travel state information of the plural other vehicles 2 in the group ride mode. In this way, it is possible to execute the distance control in the group ride mode by using the larger pieces of the information on the traffic condition around the subject vehicle 1. Therefore, the distance control in the group ride mode can appropriately be executed according to the traffic condition around the subject vehicle 1.

According to the invention, in the controller 20, the identification section 23 extracts the vehicle specific information of the other vehicle 2 as the vehicle specific information based on the image data capturing the other vehicle 2. Then, by comparing the extracted vehicle specific information to the group-vehicle specific information as the vehicle specific information of the vehicle in the group that is acquired in advance, the identification section 23 identifies the other vehicle 2. In this way, the other vehicle 2 is appropriately identified by using the image data that is acquired by the camera 15.

Preferably, in the controller 20, the vehicle specific information includes the information on the license plate 19 (that is, the license plate information). Thus, by focusing on differences in the license plate information among the vehicles around the subject vehicle 1, the other vehicle 2 is further appropriately identified by using the image data acquired by the camera 15.

Preferably, in the controller 20, the vehicle specific information includes the information on the shape (that is, the shape information). Thus, by focusing on differences in the shape information among the vehicles around the subject vehicle 1, the other vehicle 2 is further appropriately identified by using the image data acquired by the camera 15.

Preferably, in the controller 20, the vehicle specific information includes the information on the color (that is, the color information). Thus, by focusing on differences in the color information among the vehicles around the subject vehicle 1, the other vehicle 2 is further appropriately identified by using the image data acquired by the camera 15.

Preferably, in the controller 20, the vehicle specific information includes the information on the pattern (that is, the pattern information). Thus, by focusing on differences in the pattern information among the vehicles around the subject vehicle 1, the other vehicle 2 is further appropriately identified by using the image data acquired by the camera 15.

Preferably, in the controller 20, the vehicle specific information includes the information on the dimension (that is, the dimension information). Thus, by focusing on differences in the dimension information among the vehicles around the subject vehicle 1, the other vehicle 2 is further appropriately identified by using the image data acquired by the camera 15.

Preferably, in the controller 20, the identification section 23 sets the type of the vehicle specific information used to identify the other vehicle 2 according to the combination of the motorcycles constituting the group. In this way, the other vehicle 2 can be identified with the higher degree of accuracy.

Preferably, the identification section 23 of the controller 20 automatically sets the type of the vehicle specific information according to the combination of the motorcycles traveling in the group. The identification section 23 automatically sets the type of the vehicle specific information regardless of the setting operation performed by the rider. In this way, it is possible to easily and appropriately set the type of the vehicle specific information used to identify the other vehicle 2.

Preferably, in the controller 20, the acquisition section 21 acquires the group-vehicle specific information based on the information on the setting operation by the rider. In this way, the group-vehicle specific information can be acquired neither excessively or deficiently.

Preferably, the acquisition section 21 of the controller 20 automatically acquires the group-vehicle specific information regardless of the setting operation performed by the rider. In this way, the group-vehicle specific information can easily be acquired.

The present invention is not limited to the embodiment that has been described. Reference Signs List

1: Motorcycle (subject vehicle)
2: Other vehicle
2a: Other vehicle
2b: Other vehicle
2c: Other vehicle
2d: Other vehicle
11: Engine
12: Hydraulic pressure control unit
13: Display device
14: Surrounding environment sensor
15: Camera
16: Input device
17: Front-wheel rotational frequency sensor
18: Rear-wheel rotational frequency sensor
19: License plate
20: Controller
21: Acquisition section
22: Execution section
23: Identification section
C1: Center
D1: Distance
R1: Detection range

## Claims

1. A controller (20) for maneuvering a motorcycle (1), the controller comprising
an execution section (22) configured to execute an adaptive cruise control based on a surrounding environment information of the motorcycle (1), the execution section (22), in the adaptive cruise control, configured to control a speed of the motorcycle (1) automatically without an acceleration operation or a deceleration operation by a rider of the motorcycle (1) to keep a distance between the motorcycle (1) and a target vehicle at a target distance, wherein
the controller (20) further comprises:
an acquisition section (21) that is configured to acquire an image data based on a detection result output from a camera (15) mounted to a subject vehicle (1), the image data that captures another vehicle (2) traveling in a group ride in which a group of motorcycles including the subject vehicle (1) and the other vehicle (2) is traveling in a group; and
an identification section (23) that is configured to identify the other vehicle (2) based on the image data acquired by the acquisition section (21), and
the execution section (22) is configured to execute a group ride mode, which is a mode of the adaptive cruise control and is executed during the group ride, based on a travel state information of the other vehicle (2) identified by the identification section (23), wherein
the identification section (23) is configured to:
extract, as a vehicle specific information, information specific to the other vehicle (2) based on the image data; and
identify the other vehicle (2) by comparing the vehicle specific information to a group-vehicle specific information that is information specific to vehicles included in the group and that is obtained in advance.

2. The controller according to claim 1, wherein
the execution section (22) is configured to execute the group ride mode based on the travel state information of a plurality of other vehicles (2).

3. The controller according to claim 2, wherein
the execution section (22), during the group ride mode, is configured to execute the distance control based on the travel state information of the plurality of other vehicles (2).

4. The controller according to any one of claims 1 to 3, wherein
the vehicle specific information includes information about a license plate (19).

5. The controller according to any one of claims 1 to 4, wherein
the vehicle specific information includes information about a shape.

6. The controller according to any one of claims 1 to 5, wherein
the vehicle specific information includes information about a color.

7. The controller according to any one of claims 1 to 6, wherein
the vehicle specific information includes information about a pattern.

8. The controller according to any one of claims 1 to 7, wherein
the vehicle specific information includes information about a dimension.

9. The controller according to any one of claims 1 to 8, wherein
the identification section (23) is configured to set a type of the vehicle specific information, which is used to identify the other vehicle (2), according to a combination of motorcycles included in the group.

10. The controller according to claim 9, wherein
the identification section (23) is configured to automatically set the type of the vehicle specific information, which is used to identify the other vehicle (2), according to the combination of the motorcycles constituting the group regardless of a setting operation performed by the rider.

11. The controller according to any one of claims 1 to 10, wherein
the acquisition section (21) is configured to acquire the group-vehicle specific information based on information input by a setting operation performed by the rider.

12. The controller according to any one of claims 1 to 10, wherein
the acquisition section (21) is configured to automatically acquire the group-vehicle specific information regardless of a setting operation by the rider.

13. A control method for maneuvering a motorcycle (1), the control method comprising
executing, using an execution section (22) of a controller (20), an adaptive cruise control based on a surrounding environment information of the motorcycle (1), the execution section (22), in the adaptive cruise control, configured to control a speed of the motorcycle (1) automatically without an acceleration operation or a deceleration operation by a rider of the motorcycle (1) to keep a distance between the motorcycle (1) and a target vehicle at a target distance, wherein
the control method further comprises:
acquiring, using an acquisition section (21) of the controller (20), an image data based on a detection result output from a camera (15) mounted to a subject vehicle (1), the image data that captures another vehicle (2) traveling in a group ride in which a group of motorcycles including the subject vehicle (1) and the other vehicle (2) is traveling in a group; and
identifying, using an identification section (23) of the controller (20), the other vehicle (2) based on the image data acquired by the acquisition section (21), and
the execution section (22) executes a group ride mode, which is a mode of the adaptive cruise control and is executed during the group ride, based on a travel state information of the other vehicle (2) identified by the identification section (23), wherein
the control method further comprises:
extracting, using the identification section (23) of the controller (20), as a vehicle specific information, information specific to the other vehicle (2) based on the image data; and
identifying, using the identification section (23) of the controller (20), the other vehicle (2) by comparing the vehicle specific information to a group-vehicle specific information that is information specific to vehicles included in the group and that is obtained in advance.

## Patentansprüche

1. Steuerung (20) zum Manövrieren eines Motorrads (1), wobei die Steuerung Folgendes umfasst
einen Ausführungsabschnitt (22), der dazu ausgelegt ist, eine adaptive Geschwindigkeitsregelung auf Basis von Informationen zu einer umliegenden Umgebung des Motorrads (1) auszuführen, wobei der Ausführungsabschnitt (22) in der adaptiven Geschwindigkeitsregelung dazu ausgelegt ist, eine Geschwindigkeit des Motorrads (1) automatisch ohne eine Beschleunigungsoperation oder eine Verzögerungsoperation durch einen Fahrer des Motorrads (1) zu steuern, um einen Abstand zwischen dem Motorrad (1) und einem Zielfahrzeug auf einem Zielabstand zu halten, wobei
die Steuerung (20) ferner Folgendes umfasst:
einen Erfassungsabschnitt (21), der dazu ausgelegt ist, auf Basis eines Detektionsergebnisses, das von einer Kamera (15) ausgegeben wird, die an einem Testfahrzeug (1) montiert ist, Bilddaten zu erfassen, wobei die Bilddaten, die ein anderes Fahrzeug (2) erfassen, das in einer Gruppenfahrt fährt, bei der eine Gruppe von Motorrädern, die das Testfahrzeug (1) und das andere Fahrzeug (2) beinhalten, in einer Gruppe fährt; und
einen Identifikationsabschnitt (23), der dazu ausgelegt ist, das andere Fahrzeug (2) auf Basis der vom Erfassungsabschnitt (21) erfassten Bilddaten zu identifizieren, und
der Ausführungsabschnitt (22) dazu ausgelegt ist, einen Gruppenfahrtmodus, bei dem es sich um einen Modus der adaptiven Geschwindigkeitsregelung handelt und der während der Gruppenfahrt auf Basis von Fahrzustandsinformationen des anderen Fahrzeugs (2), das vom Identifikationsabschnitt (23) identifiziert wird, ausgeführt wird, wobei
der Identifikationsabschnitt (23) zu Folgendem ausgelegt ist:
Extrahieren von Informationen, die sich spezifisch auf das andere Fahrzeug (2) beziehen, auf Basis der Bilddaten als fahrzeugspezifische Informationen und
Identifizieren des anderen Fahrzeugs (2) durch Vergleichen der fahrzeugspezifischen Informationen mit gruppenfahrzeugspezifischen Informationen, bei denen es sich um Informationen handelt, die sich spezifisch auf Fahrzeuge beziehen, die in der Gruppe beinhaltet sind, und die vorab erhalten werden.

2. Steuerung nach Anspruch 1, wobei
der Ausführungsabschnitt (22) dazu ausgelegt ist, den Gruppenfahrtmodus auf Basis der Fahrzustandsinformationen oder einer Mehrzahl von anderen Fahrzeugen (2) auszuführen.

3. Steuerung nach Anspruch 2, wobei
der Ausführungsabschnitt (22) während des Gruppenfahrtmodus dazu ausgelegt ist, die Abstandssteuerung auf Basis der Fahrzustandsinformationen oder der Mehrzahl von anderen Fahrzeugen (2) auszuführen.

4. Steuerung nach einem der Ansprüche 1 bis 3, wobei
die fahrzeugspezifischen Informationen Informationen über ein Nummernschild (19) beinhalten.

5. Steuerung nach einem der Ansprüche 1 bis 4, wobei
die fahrzeugspezifischen Informationen Informationen über eine Form beinhalten.

6. Steuerung nach einem der Ansprüche 1 bis 5, wobei
die fahrzeugspezifischen Informationen Informationen über eine Farbe beinhalten.

7. Steuerung nach einem der Ansprüche 1 bis 6, wobei
die fahrzeugspezifischen Informationen Informationen über ein Muster beinhalten.

8. Steuerung nach einem der Ansprüche 1 bis 7, wobei
die fahrzeugspezifischen Informationen Informationen über eine Dimension beinhalten.

9. Steuerung nach einem der Ansprüche 1 bis 8, wobei
der Identifikationsabschnitt (23) dazu ausgelegt ist, eine Art der fahrzeugspezifischen Informationen einzustellen, die verwendet werden, um das andere Fahrzeug (2) gemäß einer Kombination von Motorrädern, die in der Gruppe beinhaltet sind, zu identifizieren.

10. Steuerung nach Anspruch 9, wobei
der Identifikationsabschnitt (23) dazu ausgelegt ist, die Art der fahrzeugspezifischen Informationen automatisch einzustellen, die verwendet werden, um das andere Fahrzeug (2) gemäß der Kombination der Motorräder, die die Gruppe konstituieren, unabhängig von einer Einstellungsoperation, die vom Fahrer durchgeführt wird, zu identifizieren.

11. Steuerung nach einem der Ansprüche 1 bis 10, wobei
der Erfassungsabschnitt (21) dazu ausgelegt ist, die gruppenfahrzeugspezifischen Informationen auf Basis von Informationen zu erfassen, die von einer Einstellungsoperation eingegeben werden, die vom Fahrer durchgeführt wird.

12. Steuerung nach einem der Ansprüche 1 bis 10, wobei
der Erfassungsabschnitt (21) dazu ausgelegt ist, die gruppenfahrzeugspezifischen Informationen unabhängig von einer Einstellungsoperation des Fahrers automatisch zu erfassen.

13. Steuerverfahren zum Manövrieren eines Motorrads (1), wobei das Steuerverfahren Folgendes umfasst
Ausführen einer adaptiven Geschwindigkeitsregelung auf Basis von Informationen zu einer umliegenden Umgebung des Motorrads (1) unter Verwendung eines Ausführungsabschnitts (22) einer Steuerung (20), wobei der Ausführungsabschnitt (22) in der adaptiven Geschwindigkeitsregelung dazu ausgelegt ist, eine Geschwindigkeit des Motorrads (1) automatisch ohne eine Beschleunigungsoperation oder eine Verzögerungsoperation durch einen Fahrer des Motorrads (1) zu steuern, um einen Abstand zwischen dem Motorrad (1) und einem Zielfahrzeug auf einem Zielabstand zu halten, wobei
das Steuerverfahren ferner Folgendes umfasst:
Erfassen von Bilddaten auf Basis eines Detektionsergebnisses, das von einer Kamera (15) ausgegeben wird, die an einem Testfahrzeug (1) montiert ist, unter Verwendung eines Erfassungsabschnitts (21) der Steuerung (20), wobei die Bilddaten, die ein anderes Fahrzeug (2) erfassen, das in einer Gruppenfahrt fährt, bei der eine Gruppe von Motorrädern, die das Testfahrzeug (1) und das andere Fahrzeug (1) beinhalten, in einer Gruppe fährt; und
Identifizieren des anderen Fahrzeugs (2) auf Basis der vom Erfassungsabschnitt (21) erfassten Bilddaten unter Verwendung eines Identifikationsabschnitts (23) der Steuerung (20), und
der Ausführungsabschnitt (22) einen Gruppenfahrtmodus ausführt, bei dem es sich um einen Modus der adaptiven Geschwindigkeitsregelung handelt, und der während der Gruppenfahrt auf Basis von Fahrzustandsinformationen des anderen Fahrzeugs (2), das vom Identifikationsabschnitt (23) identifiziert wird, ausgeführt wird, wobei
das Steuerverfahren ferner Folgendes umfasst:
Extrahieren von Informationen, die sich spezifisch auf das andere Fahrzeug (2) beziehen, unter Verwendung des Identifikationsabschnitts (23) der Steuerung (20) auf Basis der Bilddaten und
Identifizieren des anderen Fahrzeugs (2) unter Verwendung des Identifikationsabschnitts (23) der Steuerung (20) durch Vergleichen der fahrzeugspezifischen Informationen mit gruppenfahrzeugspezifischen Informationen, bei denen es sich um Informationen handelt, die sich spezifisch auf Fahrzeuge beziehen, die in der Gruppe beinhaltet sind, und die vorab erhalten werden.

## Revendications

1. Dispositif de commande (20) pour manœuvrer une motocyclette (1), le dispositif de commande comprenant
une section d'exécution (22) configurée pour exécuter un régulateur de vitesse adaptatif sur la base d'informations d'environnement immédiat de la motocyclette (1), la section d'exécution (22), dans le régulateur de vitesse adaptatif, étant configurée pour commander une vitesse de la motocyclette (1) automatiquement sans opération d'accélération ni opération de décélération par un motocycliste de la motocyclette (1) pour garder une distance entre la motocyclette (1) et un véhicule cible sur une distance cible, dans lequel
le dispositif de commande (20) comprend en outre :
une section d'acquisition (21) qui est configurée pour acquérir des données d'image sur la base d'une sortie de résultat de détection provenant d'une caméra (15) montée sur un véhicule sujet (1), les données d'image capturant un autre véhicule (2) se déplaçant dans une conduite en groupe dans laquelle un groupe de motocyclettes incluant le véhicule sujet (1) et l'autre véhicule (2) se déplace en groupe ; et
une section d'identification (23) qui est configurée pour identifier l'autre véhicule (2) sur la base des données d'image acquises par la section d'acquisition (21), et
la section d'exécution (22) est configurée pour exécuter un mode de conduite en groupe, qui est un mode du régulateur de vitesse adaptatif et est exécuté pendant la conduite en groupe, sur la base d'informations d'état de déplacement de l'autre véhicule (2) identifié par la section d'identification (23), dans lequel
la section d'identification (23) est configurée pour :
extraire, en tant qu'informations spécifiques au véhicule, des informations spécifiques à l'autre véhicule (2) sur la base des données d'image ; et
identifier l'autre véhicule (2) en comparant les informations spécifiques au véhicule à des informations spécifiques à un véhicule de groupe qui sont des informations spécifiques à des véhicules inclus dans le groupe et qui sont obtenues à l'avance.

2. Dispositif de commande selon la revendication 1, dans lequel
la section d'exécution (22) est configurée pour exécuter le mode de conduite en groupe sur la base des informations d'état de déplacement d'une pluralité d'autres véhicules (2).

3. Dispositif de commande selon la revendication 2, dans lequel
la section d'exécution (22), pendant le mode de conduite en groupe, est configurée pour exécuter la commande de distance sur la base des informations d'état de déplacement de la pluralité d'autres véhicules (2).

4. Dispositif de commande selon l'une quelconque des revendications 1 à 3, dans lequel
les informations spécifiques au véhicule incluent des informations sur une plaque d'immatriculation (19).

5. Dispositif de commande selon l'une quelconque des revendications 1 à 4, dans lequel
les informations spécifiques au véhicule incluent des informations sur une forme.

6. Dispositif de commande selon l'une quelconque des revendications 1 à 5, dans lequel
les informations spécifiques au véhicule incluent des informations sur une couleur.

7. Dispositif de commande selon l'une quelconque des revendications 1 à 6, dans lequel
les informations spécifiques au véhicule incluent des informations sur un motif.

8. Dispositif de commande selon l'une quelconque des revendications 1 à 7, dans lequel
les informations spécifiques au véhicule incluent des informations sur une dimension.

9. Dispositif de commande selon l'une quelconque des revendications 1 à 8, dans lequel
la section d'identification (23) est configurée pour définir un type des informations spécifiques au véhicule, qui est utilisé pour identifier l'autre véhicule (2), selon une combinaison de motocyclettes incluses dans le groupe.

10. Dispositif de commande selon la revendication 9, dans lequel
la section d'identification (23) est configurée pour définir automatiquement le type des informations spécifiques au véhicule, qui est utilisé pour identifier l'autre véhicule (2), selon la combinaison de motocyclettes constituant le groupe indépendamment d'une opération de réglage réalisée par le motocycliste.

11. Dispositif de commande selon l'une quelconque des revendications 1 à 10, dans lequel
la section d'acquisition (21) est configurée pour acquérir les informations spécifiques au véhicule de groupe sur la base d'informations saisies par une opération de réglage réalisée par le motocycliste.

12. Dispositif de commande selon l'une quelconque des revendications 1 à 10, dans lequel
la section d'acquisition (21) est configurée pour acquérir automatiquement les informations spécifiques au véhicule de groupe indépendamment d'une opération de réglage réalisée par le motocycliste.

13. Procédé de commande pour manœuvrer une motocyclette (1), le procédé de commande comprenant
l'exécution, à l'aide d'une section d'exécution (22) d'un dispositif de commande (20), d'un régulateur de vitesse adaptatif sur la base d'informations d'environnement immédiat de la motocyclette (1), la section d'exécution (22), dans le régulateur de vitesse adaptatif, étant configurée pour commander une vitesse de la motocyclette (1) automatiquement sans opération d'accélération ni opération de décélération par un motocycliste de la motocyclette (1) pour garder une distance entre la motocyclette (1) et un véhicule cible à une distance cible, dans lequel
le procédé de commande comprend en outre :
l'acquisition, à l'aide d'une section d'acquisition (21) du dispositif de commande (20), de données d'image sur la base d'une sortie de résultat de détection provenant d'une caméra (15) montée sur un véhicule sujet (1), les données d'image capturant un autre véhicule (2) se déplaçant dans une conduite en groupe dans laquelle un groupe de motocyclettes incluant le véhicule sujet (1) et l'autre véhicule (2) se déplace en groupe ; et
l'identification, à l'aide d'une section d'identification (23) du dispositif de commande (20), de l'autre véhicule (2) sur la base des données d'image acquises par la section d'acquisition (21), et
la section d'exécution (22) exécute un mode de conduite en groupe, qui est un mode du régulateur de vitesse adaptatif et est exécuté pendant la conduite en groupe, sur la base d'informations d'état de déplacement de l'autre véhicule (2) identifié par la section d'identification (23), dans lequel
le procédé de commande comprend en outre :
l'extraction, à l'aide de la section d'identification (23) du dispositif de commande (20), en tant qu'informations spécifiques au véhicule, d'informations spécifiques à l'autre véhicule (2) sur la base des données d'image ; et
l'identification, à l'aide de la section d'identification (23) du dispositif de commande (20), de l'autre véhicule (2) en comparant les informations spécifiques au véhicule de groupe à des informations spécifiques au véhicule de groupe qui sont des informations spécifiques à des véhicules inclus dans le groupe et qui sont obtenues à l'avance.
